# EUROPÄISCHE PATENTSCHRIFT

(11) **EP 2 834 138 B1**
(45) Veröffentlichungstag und Bekanntmachung des Hinweises auf die Patenterteilung: **10.10.2018**
(21) Anmeldenummer: 13712541.5
(22) Anmeldetag: 25.03.2013
(51) Int. Cl.: B62D 35/02, B60K 13/04, B62D 37/02

(54) **KRAFTFAHRZEUG MIT EINER UNTERBODENVERKLEIDUNG**
MOTOR VEHICLE WITH AN UNDERBODY TRIM
VÉHICULE AUTOMOBILE MUNI D'UN HABILLAGE DE DESSOUS DE CAISSE

(30) Priorität: 04.04.2012 DE 102012205582
(43) Veröffentlichungstag der Anmeldung: 11.02.2015
(73) Patentinhaber: Bayerische Motoren Werke Aktiengesellschaft, 80809 München (DE)
(72) Erfinder: DIMITRIOU, Ioannis, 85417 Marzling (DE); HILLSTRÖM, Mats, Stefan, 110015 Shenyang/Dongling District (CN); MAYER, Jochen, 85356 Freising (DE); MESZAROS, Stefan, 80993 München (DE); SEITZ, Christian, 85774 Unterföhring (DE)
(86) Internationale Anmeldenummer: PCT/EP2013/056271
(87) Internationale Veröffentlichungsnummer: WO 2013/149876

(56) Entgegenhaltungen:
- EP-A2- 1 013 540
- EP-A2- 1 609 706
- DE-A1- 19 961 316
- JP-A- H03 576
- JP-A- H07 215 074

## Beschreibung

Die Erfindung betrifft ein Kraftfahrzeug mit einer Unterbodenverkleidung nach dem Oberbegriff des Anspruchs 1.

Ein derartiges Kraftfahrzeug ist beispielsweise aus der DE 43 19 281 A1 bekannt. Das Kraftfahrzeug weist ein plattenförmiges Verkleidungsteil unterhalb des Bodenblechs auf, das mit einer Vielzahl von Lufteinlässen versehen ist. Hierdurch wird ein Grenzschichtbereich an der der Luftströmung bei Fahrt des Kraftfahrzeugs zugewandten Seite des Verstärkungsteils, der turbulenzgefährdet ist, in Richtung des Bodenblechs abgesaugt. Somit strömt der verbleibende Teil der Luft an der angeströmten Seite des Verstärkungsteils laminar an der Unterbodenverkleidung entlang, wodurch sich ein geringerer Luftwiderstand ergibt. Die bekannte Unterbodenverkleidung erstreckt sich auch im Heckbereich des Kraftfahrzeugs und deckt hierbei beispielsweise einen Tank und einen Endschalldämpfer ab.

Des Weiteren ist aus der JP H07 21 5074 A ein Kraftfahrzeug bekannt, mit einem Lufteinlass im Bereich eines Endschalldämpfers, der von einer Unterbodenverkleidung im Heckbereich des Kraftfahrzeugs abgedeckt wird.

Ein Kraftfahrzeug mit einer Unterbodenverkleidung im Heckbereich des Kraftfahrzeugs gemäß dem Oberbegriff des Anspruchs 1 ist in der DE 199 61 316 A1 offenbart.

Aufgabe der Erfindung ist, die Unterbodenverkleidung des bekannten Kraftfahrzeugs weiterzuentwickeln, insbesondere eine wirksame Kühlung eines Endschalldämpfers zu erreichen, ohne hierbei den Luftwiderstandsbeiwert des Kraftfahrzeugs zu erhöhen.

Diese Aufgabe wird durch ein Kraftfahrzeug mit den Merkmalen des Anspruchs 1 gelöst.

Kerngedanke der Erfindung ist, die Unterbodenverkleidung mit wenigstens einem Lufteinlass im Bereich des Endschalldämpfers zu versehen, wobei der Lufteinlass ausschließlich in einem solchen Bereich angeordnet ist, in dem sich bei Fahrt des Kraftfahrzeugs an der Unterseite der Unterbodenverkleidung ein höherer Druck einstellt als im darüber liegenden Bereich des Bodenbleches. Mit einem derart platzierten Lufteinlass wird erreicht, dass die entlang der Unterbodenverkleidung strömende Luft allein aufgrund der Druckverhältnisse zwischen der Außenseite und der Innenseite der Unterbodenverkleidung in den Lufteinlass einströmt. Somit wird ein besonders widerstandsarmes Einströmen von Umgebungsluft in den Zwischenraum zwischen Unterbodenverkleidung und Bodenblech erreicht, so dass in ausreichendem Maß Kühlluft für diesen durch den Endschalldämpfer thermisch belasteten Bereich zur Verfügung steht. Durch das widerstandsarme Einströmen der Kühlluft wird der Luftwiderstandsbeiwert des Kraftfahrzeugs im Vergleich zu einem Kraftfahrzeug ohne Lufteinlass nicht erhöht oder sogar gesenkt, so dass hierdurch trotz verbesserter thermischer Betriebssicherheit des Kraftfahrzeugs dessen Kraftstoffverbrauch unverändert bleibt oder sogar gesenkt wird.

Bei Druckmessungen im Heckbereich von Kraftfahrzeugen, mit einer Mehrzahl von Messungen an zueinander in Fahrzeuglängsrichtung des Kraftfahrzeugs versetzten Messpunkten, lässt sich ein Schwellpunkt bzw. eine etwa in Querrichtung des Kraftfahrzeugs verlaufende Linie von Schwellpunkten lokalisieren. An diesem Schwellpunkt bzw. an diesen Schwellpunkten ist der Unterdruck an der Unterseite der Unterbodenverkleidung und der Unterdruck im Zwischenraum zwischen Unterbodenverkleidung und Bodenblech gleich groß. Im Bereich hinter diesem Schwellpunkt bzw. hinter diesen Schwellpunkten kann, wie bereits oben erläutert, bei Fahrt des Kraftfahrzeugs aufgrund der Druckverhältnisse ein Anteil der Unterbodenströmung selbsttätig in den Zwischenraum zwischen Unterbodenverkleidung und Bodenblech einströmen. Gemäß der Erfindung wird der Lufteinlass gezielt im Bereich hinter dem Schwellpunkt bzw. hinter der Linie von Schwellpunkten angeordnet.

Bei dem thermisch belasteten Bereich handelt es sich hauptsächlich um die Umgebung des durch die Unterbodenverkleidung abgedeckten Endschalldämpfers. Die Unterbodenverkleidung verhindert, dass die thermische Energie in diesem Bereich selbsttätig durch Konvektion oder Abstrahlung entweichen kann. Somit käme es ohne zusätzliche Maßnahmen zu einer unzulässig hohen Temperatur in der Umgebung des Endschalldämpfers, einschließlich des oberhalb des Endschalldämpfers angeordneten Bodenblechs und gegebenenfalls oberhalb des Bodenblechs im Gepäckraum angeordneter Komponenten. Häufig sind im unteren Bereich des Gepäckraumes elektrische und elektronische Komponenten, wie beispielsweise eine Starterbatterie oder ein Steuergerät, angeordnet. Darüber hinaus befinden sich vielfach auch Komponenten von Fahrwerksregelsystemen in der Umgebung des Endschalldämpfers.

Durch das erfindungsgemäße widerstandsarme Einleiten von Kühlluft in Bereiche mit größerer thermischer Belastung, so genannte "Hot Spots", wird die thermische Betriebssicherheit des Kraftfahrzeugs verbessert. Durch einen erfindungsgemäßen Lufteinlass kann die Temperatur am Bodenblech des Kraftfahrzeugs minimiert werden. Die Erfindung kann bei allen Varianten von Kraftfahrzeugen eingesetzt werden, unabhängig vom Antriebs-, Motor- und/oder Karosseriekonzept. Das Phänomen, dass in einem bestimmten Bereich unter der Unterbodenverkleidung der Druck größer ist als im darüber liegenden Zwischenraum zwischen Unterbodenverkleidung und Bodenblech, tritt bereits bei geringen Geschwindigkeiten auf und verstärkt sich mit zunehmender Geschwindigkeit des Kraftfahrzeugs, so dass die Erfindung in vielen Betriebszuständen des Kraftfahrzeugs eine große Wirksamkeit entfaltet.

Der wenigstens eine Lufteinlass kann in beliebiger Weise ausgeführt sein, beispielsweise als klassische Rampe, als großer NACA-Einlass, in Form mehrerer kleinerer NACA-Einlässe etc. Sind mehrere Einlässe vorgesehen, so sind diese in Fahrtrichtung nebeneinander, also in Querrichtung des Kraftfahrzeugs, zumindest annähernd in einer Reihe, angeordnet.

Erfindungsgemäß ist der Lufteinlass - in Längsrichtung des Kraftfahrzeugs betrachtet - hinter dem Endschalldämpfer angeordnet. Hierdurch wird erreicht, dass die Luft hinter dem Endschalldämpfer in den Zwischenraum zwischen Bodenblech und Unterbodenverkleidung einströmt und nach einer Umlenkung in Fahrtrichtung den gesamten Endschalldämpfer umspülen kann.

In vorteilhafter Ausgestaltung der Erfindung ist die Unterbodenverkleidung als Diffusor ausgestaltet, mit einem entgegen der Fahrtrichtung in Hochrichtung des Kraftfahrzeugs ansteigenden Niveau der Unterbodenverkleidung. Durch den zum Heckbereich des Kraftfahrzeugs zunehmenden Abstand zwischen der Unterseite der Unterbodenverkleidung und der Fahrbahn steigt bei Vorwärtsfahrt des Kraftfahrzeugs der Druck an der Unterseite der Unterbodenabdeckung in Richtung des Fahrzeughecks kontinuierlich an, reduziert sich also mit anderen Worten der Unterdruck an der Unterbodenverkleidung. Zusätzlich wirkt sich die Ausgestaltung der Unterbodenverkleidung als Diffusor vorteilhaft auf das Auftriebsverhalten des Kraftfahrzeugs und damit auf die Fahreigenschaften des Kraftfahrzeugs aus.

Die Erfindung kann in zwei grundsätzlichen Ausführungsformen realisiert werden, in Abhängigkeit von der Bauhöhe des Endschalldämpfers.

Bei Kraftfahrzeugen mit einem Endschalldämpfer, der aufgrund seiner Bauhöhe im Zwischenraum zwischen Bodenblech und Unterbodenverkleidung Platz findet und somit komplett durch die Unterbodenverkleidung abgedeckt werden kann, wird der Lufteinlass ausschließlich durch eine Aussparung in der Unterbodenverkleidung gebildet. Diese Aussparung ist - in Hochrichtung des Kraftfahrzeugs betrachtet - unterhalb der Unterseite des Endschalldämpfers angeordnet. Die Lagebezeichnung "unterhalb" bezieht sich dabei auf die Hochrichtung des Kraftfahrzeugs und schließt einen Versatz in Längsrichtung des Kraftfahrzeugs nicht aus.

Bei Kraftfahrzeugen mit einem Endschalldämpfer, der aufgrund seiner Bauhöhe nicht vollständig durch eine Unterbodenverkleidung abgedeckt werden kann, weist die Unterbodenverkleidung eine Aussparung auf, die größer als der Lufteinlass ist. Somit kann die Unterseite des Endschalldämpfers durch die Aussparung in der Unterbodenverkleidung hindurch ragen, das heißt, die Unterseite des Endschalldämpfers steht über die Kontur der Unterbodenverkleidung nach unten vor. Hierbei schließt der vordere Rand der Aussparung mit einem möglichst kleinen Spalt an die Vorderseite des nach unten in Richtung der Fahrbahn vorstehenden Endschalldämpfers an. Dieser Bereich ist so gestaltet, dass die am Unterboden entlang strömende Luft den Spalt möglichst verlustfrei überströmt. An der Rückseite des Endschalldämpfers hingegen ist gezielt ein größerer Spalt zwischen dem Endschalldämpfer und dem hinteren Rand der Aussparung vorgesehen. Dieser Spalt stellt den Lufteinlass dar, das heißt, der Endschalldämpfer bildet im Zusammenspiel mit der Aussparung in der Unterbodenverkleidung den Lufteinlass.

Die Erfindung lässt sich in vorteilhafter Weise bei Kraftfahrzeugen anwenden, die einen quer zur Fahrtrichtung angeordneten Endschalldämpfer aufweisen. Die Erfindung ist grundsätzlich jedoch auch bei Kraftfahrzeugen einsetzbar, die einen schräg zur Fahrtrichtung oder einen in Fahrtrichtung angeordneten Endschalldämpfer aufweisen.

In weiterer Ausgestaltung der Erfindung ist wenigstens ein Luftleitblech vorgesehen, das die Luft, die aus der Unterbodenumströmung nach oben in Richtung des Bodenblechs strömt, um den Endschalldämpfer herum leitet. Dieses Luftleitblech kann mit einem Wärmeschutzblech, das die Wärmestrahlung des Endschalldämpfers abschirmt, zusammenwirken, indem das Wärmeschutzblech zusätzlich Luftführungsaufgaben wahrnimmt. Ebenso kann das Luftleitblech auch die Funktion eines Wärmeschutzblechs wahrnehmen. Somit gewährleistet der Verbund aus Luftleitblech und Wärmeschutzblech eine wirksame Umspülung des Endschalldämpfers und gegebenenfalls benachbarter Bereiche mit kühlender Umgebungsluft.

Für eine wirksame Umströmung mit geringen Strömungsverlusten überdeckt die erfindungsgemäße Unterbodenverkleidung einen möglichst großen Teil des Unterbodens des Kraftfahrzeugs. In einer ersten Ausführungsform der Erfindung beginnt die Unterbodenverkleidung unmittelbar anschließend an die Hinterachse und erstreckt sich bis zur Verkleidung des hinteren Stoßfängers. Hierbei schließt die Unterbodenverkleidung möglichst ohne Stufen und Fugen in aerodynamisch günstiger Weise an die Verkleidung des hinteren Stoßfängers und gegebenenfalls an benachbarte Bauteile an. In einer zweiten Ausführungsform der Erfindung beginnt die Unterbodenverkleidung bereits vor der Hinterachse und deckt somit zusätzlich auch den Bereich der Hinterachse ab, woraus sich eine weiter verbesserte aerodynamische Wirksamkeit ergibt, die zum einen aus der optimierten Überströmung der Hinterachse und zum anderen aus dem größeren "Anlauf" resultiert, den die Strömung für eine gleichmäßige Umströmung des Heckbereiches des Kraftfahrzeugs nehmen kann.

Neben dem Endschalldämpfer und gegebenenfalls dem Bereich der Hinterachse deckt die Unterbodenverkleidung auch einen mehr oder weniger langen Abschnitt der zum Endschalldämpfer führenden Rohrleitung der Abgasanlage des Kraftfahrzeugs ab. In vorteilhafter Weise wird auch der Kraftstoffbehälter des Kraftfahrzeugs von der Unterbodenabdeckung abgedeckt.

Die Unterbodenverkleidung wird mittels üblicher Verbindungstechniken, wie Schrauben, Klipsen, Schweißen, Kleben etc. am Kraftfahrzeug angebracht. Das Material der Unterbodenverkleidung ist entsprechend den spezifischen Anforderungen (Festigkeit, Steifigkeit, Wärmebeständigkeit, Flexibilität etc.) auszulegen. Die Unterbodenverkleidung wird je nach den vorliegenden Beanspruchungen partiell oder großflächig mit Verstärkungen, Beschichtungen und dergleichen versehen.

Die im Zusammenhang mit der vorliegenden Erfindung verwendeten Lagebezeichnungen "vorne", "hinten", "oben", "unten", "innen", "außen" etc. beziehen sich auf die Einbaulage der betreffenden Bauteile im Kraftfahrzeug bei Vorwärtsfahrt.

Mögliche Ausführungsbeispiele der Erfindung sind in der Zeichnung dargestellt und werden nachfolgend näher beschrieben. Es zeigt:
- Fig. 1: einen schematischen Längsschnitt durch den Heckbereich eines erfindungsgemäßen Kraftfahrzeugs,
- Fig. 2: eine der Fig. 1 entsprechende Darstellung, zusätzlich mit einem Diagramm zur Veranschaulichung der Druckverhältnisse,
- Fig. 3: ein zweites Ausführungsbeispiel der Erfindung in einer der Fig. 1 entsprechenden Darstellungsweise und
- Fig. 4: eine Unteransicht auf den Heckbereich eines erfindungsgemäßen Kraftfahrzeugs.

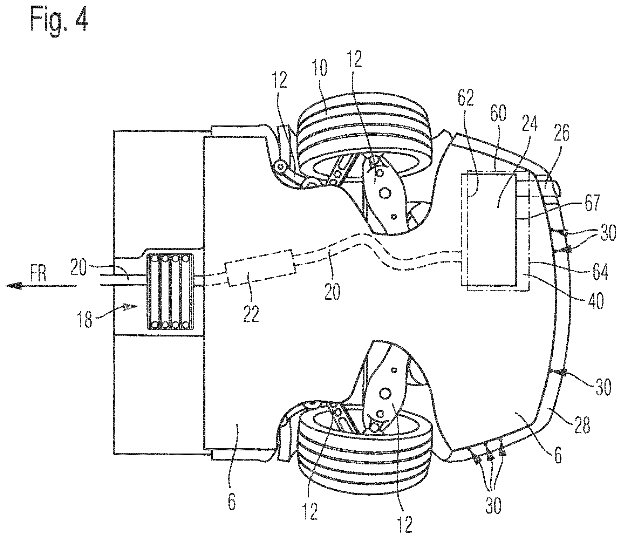

Ein in seiner Gesamtheit mit 2 bezeichnetes Kraftfahrzeug, von dem nur der hintere Abschnitt dargestellt ist, weist ein Bodenblech 4 sowie eine hierzu beabstandete Unterbodenverkleidung 6 auf, die der Fahrbahn 7 zugewandt ist. Die Hinterachse des Kraftfahrzeugs 2 ist mit 8 bezeichnet. Fig. 4 zeigt die Hinterachse 8 mit Hinterrädern 10 und Radführungsgliedern 12. Vor der Hinterachse 8 ist im Zwischenraum 14 zwischen dem Bodenblech 4 und der Unterbodenverkleidung 6 ein Kraftstoffbehälter 16 angeordnet. Außerdem ist in einem Mitteltunnel 18 eine Abgasleitung 20 mit einem Vorschalldämpfer 22 untergebracht (siehe Fig. 4). Die Abgasleitung 20 führt zu einem in Querrichtung des Kraftfahrzeugs 2 angeordneten Endschalldämpfer 24 mit einem Endrohr 26. Heckseitig schließt sich an die Unterbodenverkleidung 6 eine Verkleidung 28 eines hinteren Stoßfängers an. Die Verbindung zwischen Unterbodenverkleidung 6 und Verkleidung 28 erfolgt über eine Mehrzahl von Verbindungselementen 30.

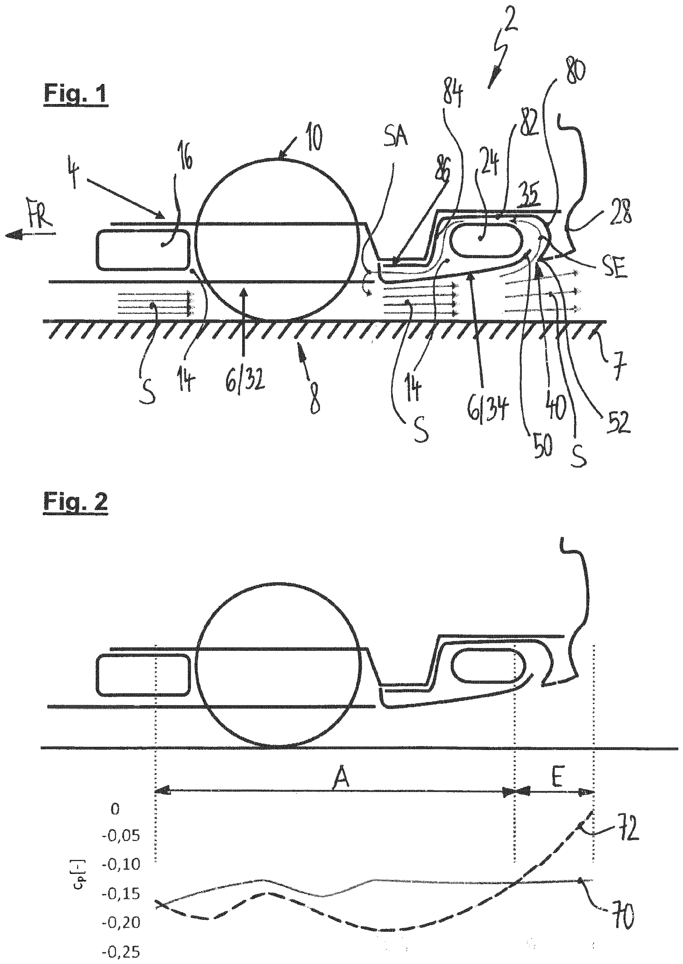

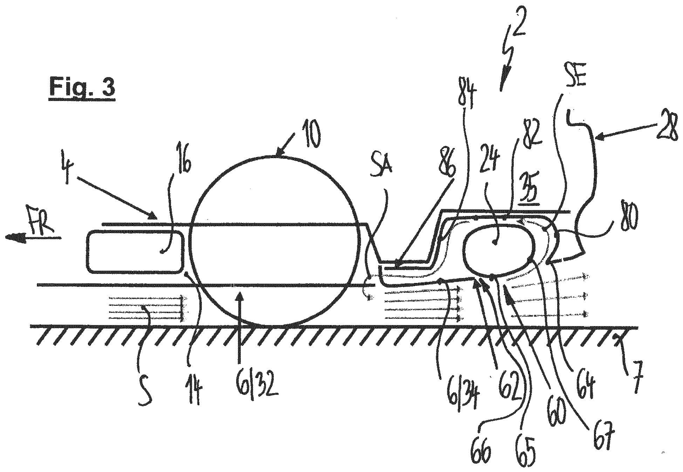

Die Unterbodenverkleidung 6 setzt sich aus einem vorderen und einem hinteren Abschnitt 32 bzw. 34 zusammen. Der vordere Abschnitt 32 deckt den Bereich des Kraftstofftanks 16 sowie den Bereich der Hinterachse 8 nach unten ab. Der hintere Abschnitt 34 deckt den Bereich unterhalb eines Gepäckraums 35 ab. In diesem Bereich ist der Endschalldämpfer 24 angeordnet. Vorderer und hinterer Abschnitt 32 bzw. 34 sind - abweichend von der zeichnerischen Darstellung in den Fig. 1 und 3 - spaltfrei miteinander verbunden, wodurch sich insgesamt eine hohe Steifigkeit der Unterbodenverkleidung 6 ergibt. Der hintere Abschnitt 34 steigt entgegen der Fahrtrichtung FR nach hinten oben an.

Im Bereich des hinteren Endes des Endschalldämpfers 24 ist in der Unterbodenverkleidung 6 ein Lufteinlass 40 vorgesehen. Der Lufteinlass 40 ist spaltförmig ausgebildet und hat etwa die gleiche Breitenerstreckung wie der Endschalldämpfer 24. In Abhängigkeit von der Höhenerstreckung des Endschalldämpfers 24 ist der Lufteinlass 40 unterschiedlich ausgebildet.

Gemäß einem ersten Ausführungsbeispiel der Erfindung nach Fig. 1 wird bei einem Endschalldämpfer 24 mit geringerer Bauhöhe der Lufteinlass 40 ausschließlich durch einen Ausschnitt in der Unterbodenverkleidung 6 gebildet. Der Ausschnitt in der Unterbodenverkleidung 6 weist einen vorderen und einen hinteren Rand 50 bzw. 52 auf. Der vordere Rand 50 ist unter einem kleinen spitzen Winkel gegenüber der Unterbodenverkleidung 6 nach innen abgewinkelt. Durch diesen Einzug wird am vorderen Rand 50 des Lufteinlasses 40 eine strömungsgünstige Rampe bereit gestellt.

Beim zweiten Ausführungsbeispiel der Erfindung gemäß Fig. 3 wird bei einem Endschalldämpfer 24 mit größerer Bauhöhe der Lufteinlass 40 durch das Zusammenspiel von Endschalldämpfer 24 und Unterbodenverkleidung 6 gebildet. Hierzu ist ein vergleichsweise großer Ausschnitt 60 in der Unterbodenverkleidung 6 vorgesehen, der in Fig. 4 mit strichpunktierten Linien dargestellt ist. Vorderer und hinterer Rand dieses Ausschnitts 60 sind mit 62 bzw. 64 bezeichnet. Der Endschalldämpfer 24 ragt mit seiner Unterseite 65 im Bereich des Ausschnitts 60 gegenüber der Kontur der Unterbodenverkleidung 6 vor. Der vordere Rand 62 des Ausschnitts 60 reicht sehr nahe an den Endschalldämpfer 24 heran, so dass ein strömungsgünstiger Übergang mit geringem Spaltmaß 66 entsteht. Die Rückseite 67 des Endschalldämpfers 24 bildet zusammen mit dem hinteren Rand 64 des Ausschnitts 60 den Lufteinlass 40. Durch die Rundung der Rückseite 67 des Endschalldämpfers 24 wird auch hier eine strömungsgünstige Rampe für die einströmende Luft bereit gestellt. Die Unterseite 65 des Endschalldämpfers 24 bildet selbst einen Teil der Fläche, an der die Unterbodenströmung bei Fahrt des Kraftfahrzeugs 2 entlang strömt.

Die Strömungsverhältnisse bei Fahrt des Kraftfahrzeugs sind in den Fig. 1 und 3 durch Strömungspfeile S dargestellt. Im Bereich vor der Hinterachse 8 bildet sich bei Fahrt des Kraftfahrzeugs 2 eine gleichmäßig gerichtete Strömung zwischen der Unterbodenverkleidung 6 und der Fahrbahn 7 aus, symbolisiert durch parallel zueinander verlaufende Strömungspfeile S. Im Anschluss an die Hinterachse 8 weitet sich der Strömungsquerschnitt durch die diffusorartig ausgestaltete Unterbodenverkleidung 6 im Heckbereich des Kraftfahrzeugs 2 auf.

Die Druckverhältnisse, die sich bei Fahrt des Kraftfahrzeugs 2 einerseits im Zwischenraum 14 zwischen Bodenblech 4 und Unterbodenverkleidung 6 und andererseits an der Unterseite der Unterbodenverkleidung 6 einstellen, sind in Fig. 2 in einem Diagramm dargestellt. Hierbei ist der Druckverlauf im Zwischenraum 14 mit durchgezogener Linie 70 und der Druckverlauf an der Unterseite der Unterbodenverkleidung 6 mit gestrichelter Linie 72 wiedergegeben. Die Druckverläufe 70 und 72 sind als normierter Druckkoeffizient cₚ angegeben und kennzeichnen den Verlauf des Unterdruckes in Längsrichtung des Kraftfahrzeugs 2. Die Zahlenwerte für den Druckkoeffizienten cₚ sind lediglich exemplarisch zu sehen.

Der Unterdruck im Zwischenraum 14 (Druckverlaufslinie 70) ist über die Längserstreckung des Heckbereichs des Kraftfahrzeugs 2 annähernd konstant. Im Unterschied hierzu ist der Unterdruck an der Unterbodenverkleidung 6 (Druckverlaufslinie 72) im vorderen Abschnitt des Heckbereichs auf einem etwa konstanten Niveau und fällt anschließend in Folge der Diffusorwirkung der Unterbodenverkleidung 6 nach hinten ab. Vom Bereich der Hinterachse 8 bis zum Bereich des Endschalldämpfers 24 ist der Unterdruck im Zwischenraum 14 dabei kleiner als der Unterdruck an der Unterseite der Unterbodenverkleidung 6. Im hinteren Bereich des Endschalldämpfers 24 schneidet die ansteigende Druckverlaufslinie 72 die Druckverlaufslinie 70. Somit ist das Diagramm gemäß Fig. 2 in einen vorderen Abschnitt A und in einen hinteren Abschnitt E unterteilt. Im Abschnitt A bewirken die Druckverhältnisse an der Unterseite des Kraftfahrzeugs 2, dass grundsätzlich Luft aus dem Zwischenraum 14 nach außen in Richtung der Fahrbahn 7 strömen kann, während im Bereich E in Folge der umgekehrten Druckverhältnisse Luft aus der Umströmung des Kraftfahrzeugs 2 mit geringen Strömungsverlusten in den Zwischenraum 14 einströmen kann.

Die im Bereich E einströmende Luft, gekennzeichnet durch Strömungspfeile SE, wird durch ein Luftleitblech 80 sowie ein parallel zum Bodenblech 4 verlaufendes Wärmeschutzblech 82 um den Endschalldämpfer 24 herum geleitet. Somit wird die Strömung gemäß den Strömungspfeilen SE gegenüber der Unterbodenströmung S um 180 ° umgelenkt und bis an den vorderen Bereich des Endschalldämpfers 24 "zurück" geführt. Dort erfolgt eine Ablenkung der Strömung nach unten, entlang eines etwa vertikal ausgerichteten Luftleitbleches 84. Anschließend strömt die Luft entlang eines Wärmeschutzbleches 86 weiter in Fahrtrichtung FR bis zum Übergang zwischen vorderem und hinterem Abschnitt 32 bzw. 34 der Unterbodenverkleidung 6. Der Austritt der umströmenden Luft, gekennzeichnet durch die Strömungspfeile SA, erfolgt im Bereich des Übergangs zwischen den Abschnitten 32 und 34 der Unterbodenverkleidung 6 über nicht von der Unterbodenverkleidung 6 abgedeckte Bereiche der Unterbodens (siehe Fig. 4), bevorzugt über seitliche Bereiche der Unterbodenverkleidung 6, in denen Freiräume für Radführungsglieder 12 der Hinterachse 8 des Kraftfahrzeugs 2 vorgesehen sind. Bei den Radführungsgliedern 12 handelt es sich beispielsweise um Querlenker, die eine entsprechend große Freigängigkeit in Hochrichtung des Kraftfahrzeugs 2 benötigen. Da im Übergangsbereich zwischen den Abschnitten 32 und 34 der Unterbodenverkleidung 6 im Zwischenraum 14 ein geringerer Unterdruck herrscht als an der Unterseite der Unterbodenverkleidung 6, strömt die Luft gemäß den Strömungspfeilen SA selbsttätig und mit geringen Strömungsverlusten aus dem Zwischenraum 14 aus. Die austretende Luft vermischt sich an der Unterseite der Unterbodenverkleidung 6 mit der mit deutlich größerer Geschwindigkeit vorbeiströmenden Unterbodenströmung S.

Die Erfindung lässt sich wie folgt zusammenfassen: Eine Unterbodenverkleidung 6 für den Heckbereich eines Kraftfahrzeugs 2 deckt einen Endschalldämpfer 24 ab. Zur Kühlung des Endschalldämpfers 24 ist ein Lufteinlass 40 in der Unterbodenverkleidung 6 vorgesehen. Dieser Lufteinlass 40 ist erfindungsgemäß in einem Bereich angeordnet, in dem sich bei Fahrt des Kraftfahrzeugs 2 an der Unterseite der Unterbodenverkleidung 6 ein höherer Druck einstellt als im Bereich des darüber angeordneten Bodenblechs 4. Somit kann kühlende Umgebungsluft mit geringen Strömungsverlusten in den Bereich des Endschalldämpfers 24 geleitet werden.

## Patentansprüche

1. Kraftfahrzeug (2) mit einer Unterbodenverkleidung (6) im Heckbereich des Kraftfahrzeugs (2), wobei die Unterbodenverkleidung (6) unterhalb eines Bodenblechs (4) des Kraftfahrzeugs (2) angeordnet ist und einen Endschalldämpfer (24) zumindest teilweise abdeckt, mit wenigstens einem Lufteinlass (40) in der Unterbodenverkleidung (6), wobei der Lufteinlass (40) im Bereich des Endschalldämpfers (24) vorgesehen ist, ausschließlich in einem solchen Bereich, in dem sich bei Fahrt des Kraftfahrzeugs (2) an der Unterseite der Unterbodenverkleidung (6) ein höherer Druck einstellt als im Zwischenraum (14) zwischen der Unterbodenverkleidung (6) und dem Bodenblech (4), **dadurch gekennzeichnet, dass** sich der Lufteinlass (40) hinter dem Endschalldämpfer (24) befindet, derart, dass die Luft hinter dem Endschalldämpfer (24) in den Zwischenraum (14) zwischen Bodenblech (4) und Unterbodenverkleidung (6) einströmt und nach einer Umlenkung in Fahrtrichtung (FR) den gesamten Endschalldämpfer (24) umspült.

2. Kraftfahrzeug nach Anspruch 1,
**dadurch gekennzeichnet, dass** die Unterbodenverkleidung (6) nach Art eines Diffusors ausgebildet ist.

3. Kraftfahrzeug nach Anspruch 1 oder 2,
**dadurch gekennzeichnet, dass** der Endschalldämpfer (24) vollständig von der Unterbodenverkleidung (6) abgedeckt ist.

4. Kraftfahrzeug nach Anspruch 1 oder 2,
**dadurch gekennzeichnet, dass** die Unterbodenverkleidung (6) eine Aussparung (60) für die Unterseite (65) des Endschalldämpfers (24) aufweist und wenigstens eine Fläche (67) des Endschalldämpfers (24) selbst eine Begrenzung des Lufteinlasses (40) bildet.

5. Kraftfahrzeug nach einem der vorangegangenen Ansprüche,
**dadurch gekennzeichnet, dass** der Endschalldämpfer (24) etwa quer zur Fahrtrichtung (FR) des Kraftfahrzeugs (2) angeordnet ist.

6. Kraftfahrzeug nach einem der vorangegangenen Ansprüche,
**dadurch gekennzeichnet, dass** im Zwischenraum (14) zwischen Bodenblech (4) und Unterbodenverkleidung (6) wenigstens ein Luftleitblech (80, 84) vorgesehen ist, das die Luft um den Endschalldämpfer (24) herum leitet.

7. Kraftfahrzeug nach Anspruch 6,
**dadurch gekennzeichnet, dass** im Zwischenraum (14) zwischen Bodenblech (4) und Unterbodenverkleidung (6) wenigstens ein Wärmeschutzblech (82, 86) vorgesehen ist, das mit dem Luftleitblech (80, 84) zusammenwirkt.

8. Kraftfahrzeug nach einem der vorangegangenen Ansprüche,
**dadurch gekennzeichnet, dass** die Unterbodenverkleidung (6) im Anschluss an die Hinterachse (8) des Kraftfahrzeugs (2) beginnt und sich bis zu einer Verkleidung (28) des hinteren Stoßfängers des Kraftfahrzeugs (2) erstreckt.

9. Kraftfahrzeug nach einem der Ansprüche 1 bis 7,
**dadurch gekennzeichnet, dass** die Unterbodenverkleidung (6) vor der Hinterachse (8) des Kraftfahrzeugs (2) beginnt und sich bis zu einer Verkleidung (28) des hinteren Stoßfängers des Kraftfahrzeugs (2) erstreckt.

## Claims

1. A motor vehicle (2), comprising underbody panelling (6) in the rear region of the motor vehicle (2), the underbody panelling (6) being arranged underneath a floor panel (4) of the motor vehicle (2) and covering an exhaust silencer (24) at least in part, comprising at least one air inlet (40) in the underbody panelling (6), the air inlet (40) being provided in the region of the exhaust silencer (24), exclusively in such a region in which, when the motor vehicle (2) is travelling, a higher pressure is exerted on the lower face of the underbody panelling (6) than in the gap (14) between the underbody panelling (6) and the floor panel (4), **characterised in that** the air inlet (40) is located behind the exhaust silencer (24) in such a way that the air flows in behind the exhaust silencer (24) into the gap (14) between the floor panel (4) and the underbody panelling (6) and, after being deflected in the direction of travel (FR), flows around the entire exhaust silencer (24).

2. A motor vehicle according to claim 1, **characterised in that** the underbody panelling (6) is constructed in the manner of a diffuser.

3. A motor vehicle according to either claim 1 or claim 2, **characterised in that** the exhaust silencer (24) is covered completely by the underbody panelling (6).

4. A motor vehicle according to either claim 1 or claim 2, **characterised in that** the underbody panelling (6) comprises a recess (60) for the lower face (65) of the exhaust silencer (24), and at least one face (67) of the exhaust silencer (24) forms a boundary of the air inlet (40).

5. A motor vehicle according to any of the preceding claims, **characterised in that** the exhaust silencer (24) is arranged approximately transversely to the direction of travel (FR) of the motor vehicle (2).

6. A motor vehicle according to any of the preceding claims, **characterised in that**, in the gap (14) between the floor panel (4) and the underbody panelling (6), at least one air deflector (80, 84) is provided, which deflects the air around the exhaust silencer (24).

7. A motor vehicle according to claim 6, **characterised in that**, in the gap (14) between the floor panel (4) and the underbody panelling (6), at least one thermal insulation plate (82, 86) is provided, which works together with the air deflector (80, 84).

8. A motor vehicle according to any of the preceding claims, **characterised in that** the underbody panelling (6) starts after the rear axle (8) of the motor vehicle (2) and extends as far as a covering (28) of the rear bumper of the motor vehicle (2).

9. A motor vehicle according to any of claims 1 to 7, **characterised in that** the underbody panelling (6) starts before the rear axle (8) of the motor vehicle (2) and extends as far as a covering (28) of the rear bumper of the motor vehicle (2).

## Revendications

1. Véhicule (2) comprenant un habillage de dessous de caisse (6) dans sa zone arrière, cet habillage de dessous de caisse (6) étant monté au-dessous d'une tôle de plancher (4) du véhicule (2) et recouvrant au moins partiellement un silencieux (24), comportant au moins une entrée d'air (40) dans l'habillage de dessous de caisse (6), l'entrée d'air (40) étant située dans la zone du silencieux (24), exclusivement dans une zone dans laquelle, lors du déplacement du véhicule (2), s'établit, sur le côté inférieur de l'habillage de dessous de caisse (6), une pression supérieure à la pression régnant dans l'espace intermédiaire (14) entre l'habillage de dessous de caisse (6) et la tôle de plancher (4), **caractérisé en ce que**
l'entrée d'air (40) est située à l'arrière du silencieux (24) de sorte que l'air pénètre, dans l'espace intermédiaire (14) entre la tôle de plancher (4) et l'habillage de dessous de caisse (6) à l'arrière du silencieux (24), et, baigne la totalité du silencieux (24) après avoir été dévié dans la direction de déplacement (FR).

2. Véhicule conforme à la revendication 1,
**caractérisé en ce que**
l'habillage de dessous de caisse (6) est réalisé sous la forme d'un diffuseur.

3. Véhicule conforme à la revendication 1 ou 2,
**caractérisé en ce que**
le silencieux (24) est totalement recouvert par l'habillage de dessous de caisse (6).

4. Véhicule conforme à la revendication 1 ou 2,
**caractérisé en ce que**
l'habillage de dessous de caisse (6) comporte un évidement (60) de réception de la face inférieure (65) du silencieux (24) et au moins une surface (67) du silencieux (24) forme en elle-même une délimitation de l'entrée d'air (40).

5. Véhicule conforme à l'une des revendications précédentes,
**caractérisé en ce que**
le silencieux (24) est monté essentiellement transversalement à la direction de déplacement (FR) du véhicule (2).

6. Véhicule conforme à l'une des revendications précédentes,
**caractérisé en ce qu'**
il est prévu dans l'espace intermédiaire (14) entre la tôle de plancher (4) et l'habillage de dessous de caisse (6) au moins une tôle de guidage de l'air (80, 84) qui transfère l'air autour du silencieux (24).

7. Véhicule conforme à la revendication 6,
**caractérisé en ce qu'**
il est prévu dans l'espace intermédiaire (14) entre la tôle de plancher (4) et l'habillage de dessous de caisse (6) au moins une tôle de protection thermique (82, 86) qui coopère avec la tôle de guidage de l'air (80, 84).

8. Véhicule conforme à l'une des revendications précédentes,
**caractérisé en ce que**
l'habillage de dessous de caisse (6) commence en étant connecté à l'essieu arrière (8) du véhicule (2) et s'étend jusqu'à un habillage (28) du pare-choc arrière du véhicule (2).

9. Véhicule conforme à l'une des revendications 1 à 7,
**caractérisé en ce que**
l'habillage de dessous de caisse (6) commence à l'avant de l'essieu arrière (8) du véhicule (2) et s'étend jusqu'à un habillage (28) du pare-choc arrière du véhicule (2).
